# FASCICULE DE BREVET EUROPEEN

(11) **EP 1 578 548 B1**
(45) Date de publication et mention de la délivrance du brevet: **24.03.2010**
(21) Numéro de dépôt: 03762732.0
(22) Date de dépôt: 03.07.2003
(51) Int. Cl.: B21K 1/46

(54) **VIS EN ACIER A TETE CREUSE**
STAHLHOHLKOPFSCHRAUBE
STEELHOLLOW-HEAD SCREW

(30) Priorité: 05.07.2002 FR 0208443
(43) Date de publication de la demande: 28.09.2005
(73) Titulaire: Valmex, 59690 Vieux Conde (FR)
(72) Inventeur: VIRGL, Alain, 89140 Pont sur Yonne (FR); LEROUX, Maxime, 59970 Odomez (FR)
(74) Mandataire: Texier, Christian
(86) Numéro de dépôt international: PCT/FR2003/002068
(87) Numéro de publication internationale: WO 2004/004944

(56) Documents cités:
- EP-A- 0 550 294
- GB-A- 2 323 387
- US-A- 2 213 813
- PATENT ABSTRACTS OF JAPAN vol. 004, no. 041 (M-005), 29 mars 1980 (1980-03-29) & JP 55 014176 A (SUMITOMO METAL IND LTD), 31 janvier 1980 (1980-01-31)

## Description

La présente invention concerne le domaine des vis.

Plus précisément la présente invention concerne le domaine des vis acier comportant une tête creuse.

La présente invention s'applique notamment, mais non exclusivement, à la réalisation de vis pour le serrage de roues sur véhicules automobiles.

De nombreuses vis en acier ont déjà été proposées (voir par exemple US-A-2 213 813).

Cependant les spécialistes connaissent la difficulté de réaliser un creux sur la tête de telles vis.

De nos jours la majorité des vis acier à tête creuse sont réalisées à l'aide de procédés comportant un traitement thermique.

L'homme de l'art sait en effet que sans un tel traitement thermique, la profondeur possible de l'empreinte était jusqu'ici fortement limitée, typiquement à un maximum de 0,4 à 0,5 fois le diamètre.

La présente invention a ainsi pour but de proposer de nouveaux moyens permettant la réalisation de vis à tête creuse présentant une empreinte de forte profondeur, tout en évitant tout traitement thermique.

Un but de la présente invention, et donc une caractéristique de celle-ci, est la réalisation de vis présentant une tête creuse dont le trou a une profondeur supérieure à 0,6 fois, avantageusement supérieure à 0,8 fois, de préférence supérieure à 0,85 fois le diamètre du trou.

Ce but est atteint dans le cadre de la présente invention, grâce à une vis réalisée par simples écrouissages successifs à froid, à l'aide d'un acier comportant un pourcentage de carbone compris entre 0,15 et 0,25%, de préférence entre 0,19 et 0,23%.

Selon une autre caractéristique avantageuse de la présente invention, le pourcentage de manganèse est compris entre 1,00 et 1,50%, de préférence entre 1,00 et 1,30%.

Selon une autre caractéristique avantageuse de la présente invention, le pourcentage de bore est compris entre 10 et 50 ppm, de préférence entre 20 et 50 ppm.

Selon une autre caractéristique avantageuse de la présente invention, le matériau constitutif de la vis comporte des microadditions de titane, typiquement de 0,01 à 0,10 %, de préférence de 0,02 à 0,05%.

Le Déposant a déterminé que la corrélation des microadditions de titane limitant le phénomène de recristallisation, et du refroidissement contrôlé lors des séquences de laminage, permet l'obtention d'une structure métallurgique ferrito-perlitique très fine et très homogène.

Selon une autre caractéristique avantageuse de la présente invention, le fil brut de laminage utilisé pour la réalisation des vis, présente des propriétés mécaniques Rm > 580 MPa et Re > 340 MPa. Le Déposant a également déterminé que de telles propriétés mécaniques étaient particulièrement bien adaptées pour une frappe de vis sans recourir aux opérations de traitement thermique classiques : recuit globulaire avant frappe et trempe + revenu après frappe.

Par ailleurs de préférence, le fil présente une ductilité Z% > 65 %. D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente schématiquement une vue latérale d'une vis conforme à la présente invention,
- la figure 2 représente une vue en bout de cette vis et
- la figure 3 représente une vue en coupe longitudinale d'une vis conforme à un mode de réalisation non limitatif de la présente invention.

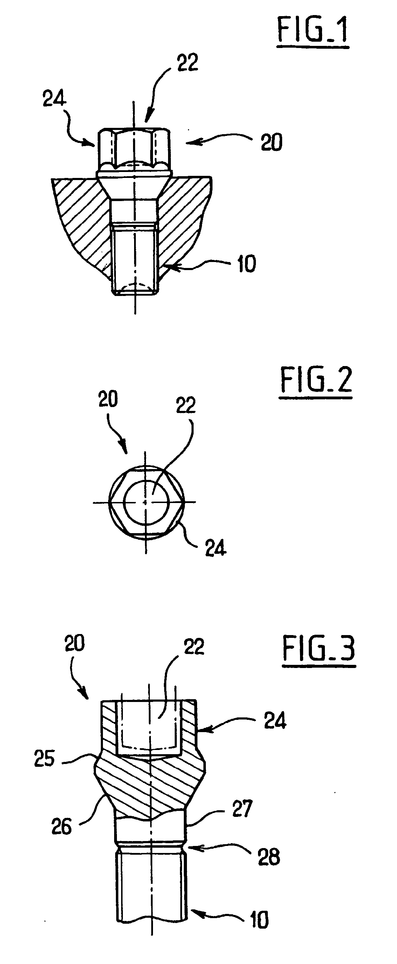

On a représenté schématiquement sur les figures 1 à 3 annexées une vis conforme à la présente invention.

Cependant la présente invention n'est aucunement limitée aux dispositions particulières illustrées sur les figures annexées, que ce soit quant à la géométrie ou aux dimensions, de la partie filetée 10, des filets eux-mêmes, ou de la tête 20, notamment du trou 22 formé dans celle-ci.

On notera néanmoins que selon le mode de réalisation non limitatif illustré sur les figures annexées, la tête 20 possède une surface externe 24 de section hexagonale, tandis que le trou 22 possède une surface interne cylindrique de révolution.

A titre d'exemple non limitatif, une telle vis peut posséder un trou 22 de diamètre interne égal à 11,5 mm et de profondeur égale à 9,8 mm.

Par ailleurs, et toujours à titre non limitatif, on notera que selon le mode de réalisation particulier et préférentiel illustré sur les figures annexées, le tronçon de section hexagonal 24 est relié à la partie filetée 10, successivement par un premier cône 25 évasé en direction de la partie filetée, un second cône 26 convergent en direction de la même partie filetée, un fut lisse 27 et une gorge 28.

Dans le cadre de la présente invention, le matériau constitutif de la vis répond de préférence aux caractéristiques suivantes :
- teneur en C : de 0,19 à 0,23 %,
- teneur en Si : de 0,30 à 0,40 %,
- teneur en Mn : de 1,00 à 1,30 %,
- teneur en P : 0,025 % max,
- teneur en S : 0,015 % max,
- teneur en Cr : 0,14 à 0,18 %,
- teneur en Mo : 0,05 % max,
- teneur en Cu : 0,25 % max,
- teneur en B : 0,0020 à 0,0050 % max,
- teneur en Ni : 0,18 % max,
- teneur en Al : 0,02 à 0,06 %,
- teneur en Tl : 0,02 à 0,05 %,
- teneur en N : 0,012 max.

La vis est de préférence réalisée à l'aide d'un fil laminé ou tréfilé répondant aux caractéristiques mécaniques suivantes :
- Rm en MPa : 580 à 650,
- Re mini en MPa : 340,
- A mini en % : 25,
- Z mini en % : 65.

Après écrouissage avec un taux de 50%, la vis présente les caractéristiques suivantes :
- Re en MPa : 640 à 900,
- Rm en MPa : 800 à 950,
- A% mini : 12,
- KCU mini J/cm² : 70.

Comme on l'a indiqué précédemment, le Déposant a déterminé que cette composition permet la réalisation de vis par simple écrouissage à froid, sans exiger de traitement thermique.

## Revendications

1. Vis à tête creuse, réalisée par simples écrouissages successifs à froid, à l'aide d'un acier comportant un pourcentage de carbone compris entre 0,15 et 0,25%.

2. Vis selon la revendication 1, **caractérisée par le fait que** le pourcentage de carbone est compris entre 0,19 et 0,23%.

3. Vis selon l'une des revendications 1 ou 2, **caractérisée par le fait qu'**elle comporte une tête creuse dont le trou a une profondeur supérieure à 0,6 fois, de préférence supérieure à 0,8 fois son diamètre.

4. Vis selon l'une des revendications 1 à 3, **caractérisée par le fait que** le pourcentage de manganèse est compris entre 1,00 et 1,50%, de préférence entre 1,00 et 1,30%.

5. Vis selon l'une des revendications 1 à 4, **caractérisée par le fait que** le pourcentage de bore est compris entre 10 et 50 ppm, de préférence entre 20 et 50 ppm.

6. Vis selon l'une des revendications 1 à 5, **caractérisée par le fait que** son matériau constitutif comporte des microadditions de titane.

7. Vis selon l'une des revendications 1 à 6, **caractérisée par le fait qu'**elle comporte de 0,01 à 0,10 % de titane, de préférence de 0,02 à 0,05%.

8. Vis selon l'une des revendications 1 à 7, **caractérisée par le fait que** le pourcentage de Silicium est compris entre 0,30 et 0,40 %.

9. Vis selon l'une des revendications 1 à 8, **caractérisée par le fait que** le pourcentage de chrome est compris entre 0,14 et 0,18 %.

10. Vis selon l'une des revendications 1 à 9, **caractérisée par le fait que** le pourcentage de souffre est de 0,015 % max.

11. Vis selon l'une des revendications 1 à 10, **caractérisée par le fait qu'**elle est réalisée à l'aide d'un fil présentant des propriétés mécaniques Rm > 580 MPa et Re > 340 MPa.

12. Vis selon l'une des revendications 1 à 11, **caractérisée par le fait qu'**elle est réalisée à l'aide d'un fil présentant une ductilité Z% > 65 %.

13. Vis selon l'une des revendications 1 à 12, **caractérisée par le fait qu'**elle est réalisée à l'aide du matériau suivant :
. teneur en C : de 0,19 à 0,23 %,
. teneur en Si : de 0,30 à 0,40 %,
. teneur en Mn : de 1,00 à 1,30 %,
. teneur en P : 0,025 % max,
. teneur en S : 0,015 % max,
. teneur en Cr : 0,14 à 0,18 %,
. teneur en Mo : 0,05 % max,
. teneur en Cu : 0,25 % max,
. teneur en B : 0,0020 à 0,0050 % max,
. teneur en Ni : 0,18 % max,
. teneur en Al : 0,02 à 0,06 %,
. teneur en Tl : 0,02 à 0,05 %,
. teneur en N : 0,012 max.

14. Application d'une vis conforme à l'une des revendications 1 à 13 à la réalisation de vis pour le serrage de roues sur véhicules automobiles.

## Claims

1. A hollow-head screw which is made by simple successive cold working operations using a steel comprising between 0.15 and 0.25% of carbon.

2. The screw as claimed in Claim 1, **characterised in that** the percentage of carbon is between 0.19 and 0.23%.

3. The screw as claimed in any one of Claims 1 or 2, **characterised in that** it comprises a hollow head the hole of which has a depth greater than 0.6 times, preferably greater than 0.8 times, its diameter.

4. The screw as claimed in any one of Claims 1 to 3, **characterised in that** the percentage of manganese is between 1.00 and 1.50%, preferably between 1.00 and 1.30%.

5. The screw as claimed in any one of Claims 1 to 4, **characterised in that** the percentage of boron is between 10 and 50 ppm, preferably between 20 and 50 ppm.

6. The screw as claimed in any one of Claims 1 to 5, **characterised in that** its structural material comprises microadditions of titanium.

7. The screw as claimed in any one of Claims 1 to 6, **characterised in that** it comprises from 0.01 to 0.10% of titanium, preferably from 0.02 to 0.05%.

8. The screw as claimed in any one of Claims 1 to 7, **characterised in that** the percentage of silicon is between 0.30 and 0.40%.

9. The screw as claimed in any one of Claims 1 to 8, **characterised in that** the percentage of chromium is between 0.14 and 0.18%.

10. The screw as claimed in any one of Claims 1 to 9, **characterised in that** the percentage of sulphur is 0.015% max.

11. The screw as claimed in any one of Claims 1 to 10, **characterised in that** it is made using a wire having mechanical properties Rm > 580 MPa and Re > 340 MPa.

12. The screw as claimed in any one of Claims 1 to 11, **characterised in that** it is made using a wire having ductility Z% > 65%.

13. The screw as claimed in any one of Claims 1 to 12, **characterised in that** it is made using the following material:
• content of C: from 0.19 to 0.23%,
• content of Si: from 0.30 to 0.40%,
• content of Mn: from 1.00 to 1.30%,
• content of P: 0.025% max,
• content of S: 0.015% max,
• content of Cr: 0.14 to 0.18%,
• content of Mo: 0.05% max,
• content of Cu: 0.25% max,
• content of B: 0.0020 to 0.0050% max,
• content of Ni: 0.18% max,
• content of Al: 0.02 to 0.06%,
• content of Tl: 0.02 to 0.05%,
• content of N: 0.012 max.

14. Application of a screw as claimed in any one of Claims 1 to 13 for making a screw for tightening wheels on to automobiles.

## Patentansprüche

1. Hohlkopfschraube, hergestellt durch einfache aufeinander folgende Kaltverformungen, mit Hilfe eines Stahls, der einen Kohlenstoffgehalt zwischen 0,15 und 0,25 % inklusive umfasst.

2. Schraube nach Anspruch 1, **dadurch gekennzeichnet, dass** der Kohlenstoffgehalt zwischen 0,19 und 0,23 % inklusive ist.

3. Schraube nach einem der Ansprüche 1 oder 2, **dadurch gekennzeichnet, dass** sie einen hohlen Kopf umfasst, dessen Loch eine Tiefe hat, die 0,6 Mal größer ist, vorzugsweise 0,8 Mal größer als sein Durchmesser.

4. Schraube nach einem der Ansprüche 1 bis 3, **dadurch gekennzeichnet, dass** der Mangangehalt zwischen 1,00 und 1,50 % inklusive ist, vorzugsweise zwischen 1,00 und 1,30 %.

5. Schraube nach einem der Ansprüche 1 bis 4, **dadurch gekennzeichnet, dass** der Borgehalt zwischen 10 und 50 ppm inklusive ist, vorzugsweise zwischen 20 und 50 ppm.

6. Schraube nach einem der Ansprüche 1 bis 5, **dadurch gekennzeichnet, dass** das Material, aus dem sie besteht, Mikrozusätze von Titan umfasst.

7. Schraube nach einem der Ansprüche 1 bis 6, **dadurch gekennzeichnet, dass** sie von 0,01 bis 0,10 % Titan umfasst, vorzugsweise von 0,02 bis 0,05 %.

8. Schraube nach einem der Ansprüche 1 bis 7, **dadurch gekennzeichnet, dass** der Siliziumgehalt zwischen 0,30 und 0,40 % inklusive ist.

9. Schraube nach einem der Ansprüche 1 bis 8, **dadurch gekennzeichnet, dass** der Chromgehalt zwischen 0,14 und 0,18 % inklusive ist.

10. Schraube nach einem der Ansprüche 1 bis 9, **dadurch gekennzeichnet, dass** der Schwefelgehalt maximal 0,015 % beträgt.

11. Schraube nach einem der Ansprüche 1 bis 10, **dadurch gekennzeichnet, dass** sie mit Hilfe eines Drahts hergestellt ist, der mechanische Eigenschaften Rm > 580 MPa und Re > 340 MPa aufweist.

12. Schraube nach einem der Ansprüche 1 bis 11, **dadurch gekennzeichnet, dass** sie mit Hilfe eines Drahts hergestellt ist, der eine Duktilität Z% > 65 % aufweist.

13. Schraube nach einem der Ansprüche 1 bis 12, **dadurch gekennzeichnet, dass** sie mit Hilfe des folgenden Werkstoffs hergestellt ist:
- Gehalt an C: von 0,19 bis 0,23 %,
- Gehalt an Si: von 0,30 bis 0,40 %,
- Gehalt an Mn: von 1,00 bis 1,30 %,
- Gehalt an P: maximal 0,25 %,
- Gehalt an S: maximal 0,015 %,
- Gehalt an Cr: 0,14 bis 0,18 %,
- Gehalt an Mo: maximal 0,05 %,
- Gehalt an Cu: maximal 0,25 %,
- Gehalt an B: 0,0020 bis maximal 0,0050 %,
- Gehalt an Ni: maximal 0,18 %,
- Gehalt an Al: 0,02 bis 0,06 %,
- Gehalt an Ti: 0,02 bis 0,05 %,
- Gehalt an N: maximal 0,012.

14. Anwendung einer Schraube nach einem der Ansprüche 1 bis 13 zur Realisierung von Schrauben zur Befestigung von Rädern an Kraftfahrzeugen.
